# EUROPEAN PATENT SPECIFICATION

(11) **EP 3 538 233 B1**
(45) Date of publication and mention of the grant of the patent: **09.09.2020**
(21) Application number: 16795034.4
(22) Date of filing: 11.11.2016
(51) Int. Cl.: A63G 1/30, A63G 31/16

(54) **TRACKLESS AMUSEMENT RIDE**
SPURLOSES FAHRGESCHÄFT
MANÈGE SANS RAIL

(43) Date of publication of application: 18.09.2019
(73) Proprietor: Antonio Zamperla S.p.A., 36077 Altavilla Vicentina (VI) (IT)
(72) Inventor: ZAMPERLA, Alberto, I-36077 Altavilla Vicentina (VI) (IT)
(74) Representative: Gislon, Gabriele
(86) International application number: PCT/EP2016/077493
(87) International publication number: WO 2018/086709

(56) References cited:
- WO-A1-01/95989
- WO-A1-95/12188
- WO-A1-2015/169336
- US-A- 5 921 780
- US-A1- 2010 240 454

## Description

### Field of the Invention

The present invention relates to the field of the amusement rides. In particular, the present invention relates to an amusement ride of the type provided with one or more vehicles for at least one user, and able to provide virtual reality to the users during the ride.

### Background of the Invention

Amusement rides able to provide enhanced sensation to the users by means of virtual reality are known. These amusement rides (such as roller coaster) typically comprise one or more vehicles moveable along a predetermined path, such as a track or a waterway.

For example, WO2016075674 and US6179619 show amusement rides provided with one or more vehicles moveable along a track. By means of head-mounted displays, a virtual reality is displayed to the users during the ride. In these rides, the virtual reality is typically a preregistered audio/video stream synchronized with the predetermined path of the ride.

The same pre-registered video is displayed to all the users with a time delay chosen on the basis of the position of the user along the track detected by means of sensors on the vehicle and/or on the head-mounted display.

In other words, the users who are at a backward position along the predetermined path will see the images of the virtual reality delayed with respect to that seen by the users who are at a more advanced position. In this way, users are able to view the images of the virtual reality synchronized with their own actual experienced sensations of acceleration and deceleration and zero gravity.

Although the general theme, i.e. the background for the virtual environment, can be changed between one course and another, the sensations of acceleration and deceleration of a ride will be the same for each ride. As a result, after few rides, the user may foresee the predetermined path of the ride and consequently the user involvement can decrease.

The change of the predetermined path in the known amusement rides is an expensive and complex operation that need of a re-elaboration of the virtual reality to obtain an accurate synchronization between the path and the video of the virtual reality.

Also, the virtual reality created for a first amusement ride, having a certain path determined by its track, is obtained by a computer program that is ride-specific, i.e. it cannot be used for a different amusement ride having a different track, i.e. a different path.

Motion simulating devices are also known. WO95/12188 discloses a spherical capsule that rests on at least three rollers, with one or more active rollers and, optionally, one or more passive rollers. The user utilizing the motion simulating device interacts with a virtual reality system.

### Summary of the invention

An object of the present invention is to overcome the drawbacks of the prior art cited above and to provide an amusement ride having a processing system to generate a virtual reality, and a related method of operating it, able to increase the fun and the entertainment experience provided to the users with respect to the prior art solutions.

A further object of the present invention is to provide an amusement ride able to offer different experience in different courses of the same amusement ride.

A further object of the present invention is to provide an amusement ride providing a virtual reality and offering interactivity with the user.

Another object of the present invention is to provide a method of operating an amusement ride having a processing system to generate a virtual reality that may be easily applied to different amusement rides.

These and other objects are achieved by the present invention by means of a trackless amusement ride according to claim 1, and its relevant method of operating according to claim 10. Preferred aspects of the invention will be indicated in dependent claims.

In particular, according to the present invention, the trackless amusement ride comprises at least one moveable amusement vehicle provided with at least one seat for one or more users, and driving means for moving the vehicle. The term "trackless amusement ride" is meant to indicate an amusement ride comprising one or more vehicles able to move without following a predetermined path, i.e. without following a guide track or rail. In an embodiment, the vehicles of the amusement ride are guided by the passenger who can change at least the position of the vehicle; thus vehicles can be moved along any of a plurality of paths that can be changed during each ride. In a trackless amusement ride, the one or more vehicles housing the passengers are not attached to and are not guided by a track or rail. Exemplary trackless rides are those rides where the vehicle is suspended from or is attached to an arm which is rotated around a vertical axis; in these rides, the user, i.e. the passenger, can direct and guide the movements of the vehicle while it is moved along a circumference.

As a result, the positions that can be reached by a vehicle of a trackless amusement ride is not determined by a track and thus are not on a predetermined line. The vehicle may attain any of a plurality of positions in the space; the positions may be located on a surface, e.g. a cylindrical surface, or in a volume, e.g. a toroid volume, the shape of the surface or the cross-sectional shape of the toroid volume depending on the degree of freedom of the vehicle and on the movements it can carry out. According to an embodiment, the positions that can be reached by a vehicle of a trackless amusement ride can be located on a "surface" that, depending on the number of degrees of freedom in the motion of the amusement vehicle may be bi-dimensional and also three-dimensional.

In other words, the user can decide the movement of the vehicle to be followed on an immaterial surface or within a volume.

Suitable trackless, or flat, rides are e.g. those produced by the Applicant and commercially available under the trade names Aero Top Jet, Mini Jet, Magic Bikes, Windstarz. Rides suitable for the invention are also disclosed e.g. in applications WO 2015/169336; EP 2081658; PCT/EP2013/074107, all in the name of the Applicant. According to an aspect of the present invention, the amusement vehicle is provided with control means (for example, a joypad, a joystick, a steering wheel, a lever and the like) operable by a user to modify at least one vehicle parameter chosen between: the movement direction of the amusement vehicle;
- the orientation of the amusement vehicle;
- the height with respect to the ground of the amusement vehicle.

The trackless amusement ride comprise at least one head-mounted display wearable by the users, and one or more head sensors to sense at least the orientation of the head of the user.

The trackless amusement ride further comprises a processing system configured to generate a virtual reality to be displayed to the users by means of the head-mounted display.

According to a particular aspect of the present invention, the processing system is configured to generate the virtual reality according to at least:
- the data sensed by the head sensors;
- one or more of the vehicle parameters.

Preferably the virtual reality comprises a 360° virtual environment that the user can watch by means of the head-mounted display. More preferably, the processing system is configured to display to the user a portion of the 360° environment on the basis of the orientation of the user's head sensed by the head sensors.

As a result, by modifying one or more vehicle parameters, the user can change the conformation of the path during the ride. At the same time the processing system display to him a virtual reality generated on the basis of the movements carried out by the vehicle and/or by the user.

Advantageously, for each ride experienced by the user, the path followed out by the vehicle and consequently the sensations of acceleration and deceleration of a ride will be chosen by the user. Each amusement vehicle is constrained to a mechanical arm rotatable around a central rotation axis, wherein the central rotation axis is preferably arranged substantially vertically with respect to the ground. For example, the driving means of the trackless amusement ride comprises a motor to rotate a central shaft, coaxially arranged with the central rotation axis, to which one or more mechanical arms are constrained.

The mechanical arm is rotatable about a second rotation axis allowing the mechanical arm to be raised or lowered with respect to the ground. For example the mechanical arm can be hinged to the central shaft and the driving means comprise for example one or more actuators (e.g. hydraulic pistons) to rotate the mechanical arm about the second rotation axis. In this embodiment, the amusement vehicle is preferably pivotally constrained to the mechanical arm so that the amusement vehicle can be suspended from the ground and the virtual reality displayed to the user may be a simulation in which the user can travel within a virtual space in an active way (e.g. by choosing the direction to follow), differently from the passive experience of the prior art in which the presence of a track prevents the freedom of choice of the user.

Some embodiments may provide that the trackless amusement ride comprises one or more vehicle sensors (preferably one or more encoders), to directly or indirectly sense a change in one or more of the vehicle parameters. As a result, this embodiment allows to detect the real movement of the amusement vehicle in a simple and reliable manner.

An alternative embodiment can provide that the change in one or more of the vehicle parameters may be detected by the head sensors. In this last case, the processing system is configured to separate (for example by a digital or analogical filtering) the data of the orientation of the user's head from the data of the movement performed by the amusement vehicle. For example, the processing system comprises one or more processing units that may be preferably integrated with each head-mounted display. Preferably, each processing unit may be connected (for example by means of a wireless communication system) to a central processing unit configured to control the operation of the driving means. In this embodiment, the head-mounted display can be a smartphone or in general a processing unit having a communication module for receiving data from the central processing unit.

Some embodiments may provide that the processing system comprises at least one processing unit associated to each of the head-mounted display, and preferably arranged on board of the vehicles (e.g. constrained to each seat of the trackless amusement ride). Thanks to the absence of a track, the vibrations that occur to the amusement vehicle during a ride are less than the amusement rides of the prior art. As result, the processing units can be secured to the vehicles of the amusement ride without the risk of damages. In this way, the processing units used can be more powerful with respect to the embodiment wherein the processing unit is integrated with the head-mounted display.

According to another aspect of the present invention, the processing system is configured to generate a virtual vehicle for the virtual reality. The virtual vehicle is a mathematical model of a real vehicle (e.g. a kite, an airplane, a submarine, etc.) controlled by the user to be moved within a virtual environment of the virtual reality. The processing system is preferably configured to move and/or orientate the virtual vehicle according to one or more of the vehicle parameters. In other words, the processing system generate a virtual vehicle moveable within a virtual space according to one or more of the vehicle parameters that can be detected directly (e.g. by means of the control means operable by the user) or indirectly (e.g. by means of the head sensors and/or by means of the vehicle sensors if are present).

A further object of the present invention is a method of operating the amusement ride according to any of the previous aspect, comprising the steps of:
(a) loading one or more users on at least one seat of the vehicle;
(b) activating the driving means to move at least one vehicle;
(c) sensing at least the orientation of the head of the user by means of the head sensors;
(d) modifying one or more of the vehicle parameters of the amusement vehicle by the control means operated by the user;
(e) generating a virtual reality as a function of the orientation of the head of the user sensed by the head sensors in the step (c) and of the operation of the user on the control means of the step (d);
(f) displaying the virtual reality (VR) of step (d) to said one or more user (U) by means of said head-mounted display (HMD).

Preferably, the driving means are controlled by a central processing unit configured to provide data about the start and the end of the ride to the processing system. As a result, the virtual reality may be generated with an accurate synchronization with the start and the end of the ride for avoiding annoying dizziness that may occur to the users when the ride is finished, especially when the virtual reality displayed to the user is not accurately synchronized with the deceleration at the end of the ride. In the case of a plurality of vehicles provided on the trackless amusement ride of the present invention, the processing system is preferably configured to generate a virtual reality as a function of the vehicle parameters of all amusement vehicles which operating during the ride. The processing system provide for each user a virtual reality on which a first user sees at least part of the other users of the amusement ride.

### Brief description of the drawings

The invention will now be described in greater detail, by way of example, with reference to the accompanying non limiting drawings. It is emphasized that, according to common practice, the various features of the drawing are not necessarily to scale. On the contrary, the dimensions of the various features are arbitrarily expanded or reduced for clarity. Like numerals denote like features throughout the specification and the drawings in which:
- Figure 1 is a schematic plant view of a trackless amusement ride according to an embodiment of the present invention;
- Figure 2 is a partial schematic front view of the trackless amusement device of figure 1, wherein only one amusement vehicle is shown;
- Figure 2A is an enlarged detail of figure 2;
- Figure 2B is a schematic front view of the virtual reality displayed on a head-mounted display placed on the head of a user;
- Figure 3 is a partial schematic view similar to figure 2, wherein the vehicle has changed its orientation due to the operation of the control device by means of a user;
- Figure 4 is a partial schematic view similar to figure 2, wherein the vehicle has changed its height with respect to the ground due to the operation of the control device by means of a user.

### Detailed description of exemplary embodiments

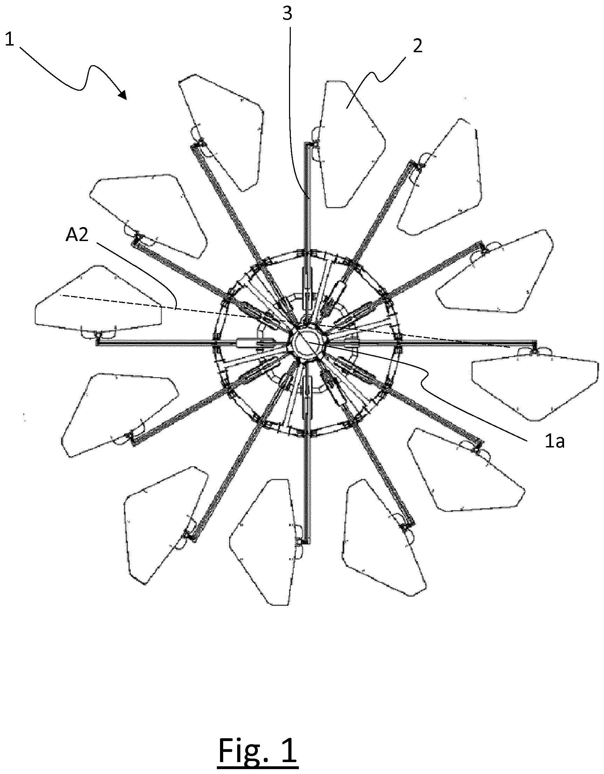

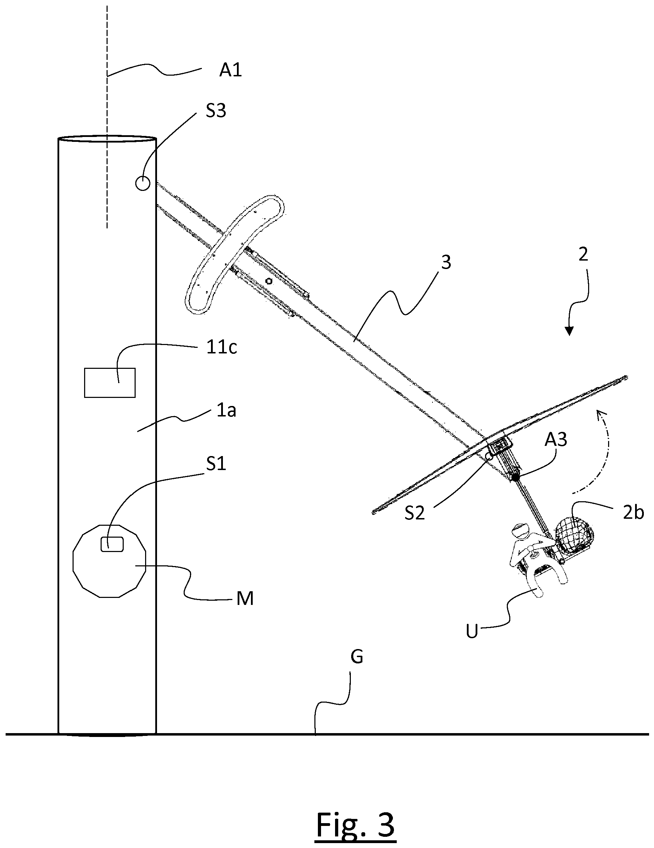

An embodiment of a trackless amusement ride 1 (from now on also "amusement ride 1") is shown in the figures 1-4. The trackless amusement is provided with one or (typically) more amusement vehicles 2, as shown in figure 1.

Reference is and will be made to an "amusement vehicle 2" (or simply "vehicle 2") when the actual "physical" vehicle of the amusement ride 1 is meant. As better discussed later, the amusement ride 1 provides the user U with the displaying of a virtual reality, where the user is typically shown as controlling a vehicle of the virtual reality. Such a vehicle of the virtual reality will be always referred as "virtual vehicle 2V".

The amusement ride is "trackless" in the meaning that the vehicles are not forced to run on a track, so that the vehicle 2, during operation of the amusement ride 1, is provided with at least one degree of freedom that is controllable by a user U of the amusement ride 1.

Typically, as per the shown embodiment, the vehicles 2 are moved around a central axis A1 (which is distanced from the vehicles 2) and, as better discussed later, the user act on the amusement ride so as to move the vehicle 2 according to its one or more degree of freedoms.

The vehicles 2 are typically substantially identical one with respect to the other. From now on, reference will be thus made to a single vehicle 2, but the following description applies as well to the other vehicles 2 that are possibly present on the amusement ride 1.

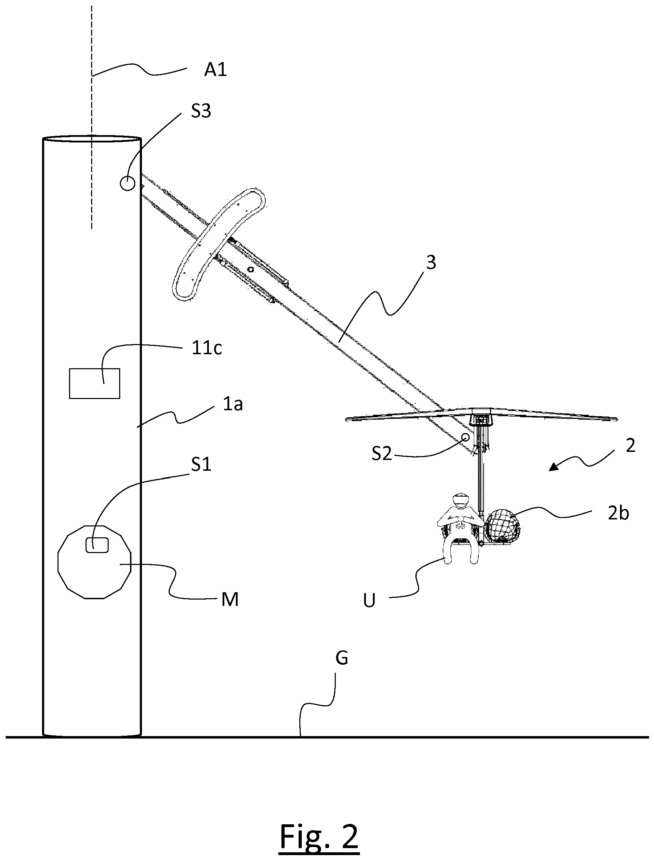

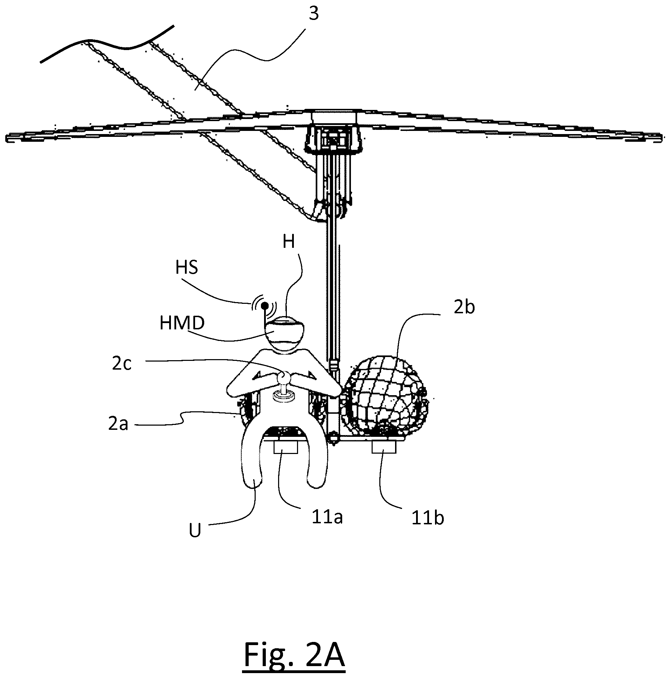

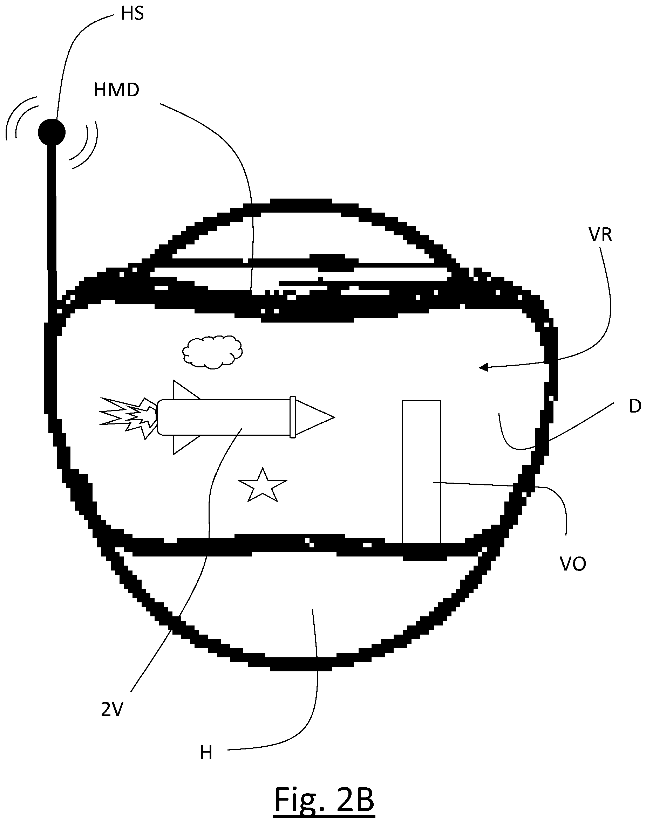

With particular reference to figure 2A, a vehicle 2 is provided with one or more seats 2a, 2b to house one or more users U (typically one user U per seat 2a, 2b). In the shown embodiment, the vehicle 2 is provided with two seats 2a, 2b. However a vehicle 2 may be provided with a different number of seats in different embodiments, not shown. For easiness of visualization, a user U is shown in seat 2a, while seat 2b is shown empty. Normally, in operation, both the seats 2a, 2b house a user U.

The vehicle 2 is generally provided with safety means (not shown and known in the art) to securely and reversibly hold the user against the seats 2a, 2b, so as to prevent him from falling from the vehicle 2 during operation of the amusement ride 1. As an example, known safety means include safety belts or movable bars that may secure the user U onto the relevant seat 2a, 2b.

As mentioned, the vehicle 2 is provided with at least one degree of freedom during operation. The vehicle is thus provided with control means 2c that are operable by a user U to control such a degree of freedom. In particular, the control means 2c are typically operable to change one or more vehicle parameter chosen between: the movement direction of the amusement vehicle 2, the orientation of the amusement vehicle 2, the height with respect to the ground of the amusement vehicle 2.

As evident to a skilled person, a change in the "movement direction" of the vehicle 2 substantially implies a turn of the vehicle with respect to its previous path. With reference to the shown embodiment, where the vehicles 2 are moved around a vertical central axis A1, a change in the movement direction of the vehicle operated by the user substantially implies a deviation from a circular pattern as seen in plant view. This may be operated e.g. by steering the vehicle 2, or by changing the distance between the vehicle and the central axis A1.

A change in the orientation of the vehicle 2, implies a rotation imparted to the vehicle around any axis.

A change in the height with respect to ground implies any variation in the vertical distance between the vehicle and a reference horizontal plane.

Typically, a single command on the control means 2c causes a variation in more than one vehicle parameter. As an example, steering (i.e. turning) the vehicle 2 causes a change in both the movement direction and the orientation of the vehicle 2. Also, as better discussed later, in the shown embodiment the vehicle is mounted on a pivotable mechanical arm 3, so that operating the mechanical arm changes both the height with respect to the ground of the vehicle and the distance between the central axis A1 and the vehicle 2 itself.

Many configurations of control means 2c may be used. In the figures, the control means 2c are shown schematically as a joystick. In different embodiments, not shown, control means may be e.g. a steering wheel, a control bar, a keyboard, etc. Also, further different control means may be wearable by the user U, e.g. sleeves provided with sensors that may be put on the user's arms. Furthermore, control means may be provided that are capable to detect a movement of the user (e.g. by a camera with sensor), or to detect a voice command of the user U. In general, any control means that is configurable to let the user give an input command to the vehicle 2 may be used.

The control means is generally electrically connected to proper actuators (known in the art and not shown in the art) that are configured to move the vehicle according to the input given by the user U himself. It is not excluded to provide a control means that is partly mechanical, e.g. to command an aerodynamic surface capable of causing a pitch, roll, yaw rotation and/or a translation of the vehicle 2.

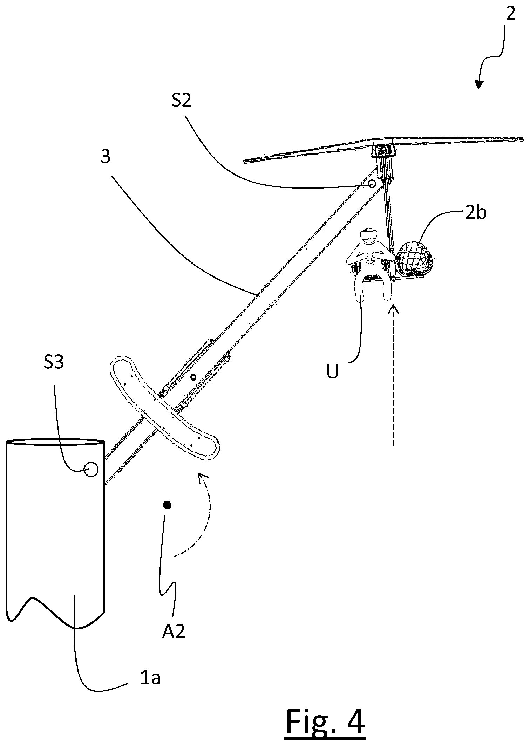

According to a preferred aspect, the vehicle 2 is movable around a central axis A1. Typically, the central axis, during operation, is substantially orthogonal to the ground G. It is not excluded that the axis A1 may be tilted with respect to the ground, and also possibly parallel with respect to the ground G. According to a possible embodiment, also, the central axis may have a vary its tilting in time during operation. According to an embodiment, shown in the figures, the amusement ride may thus be provided with a rotatable central portion 1 and with a mechanical arm 3 connecting the vehicle 2 to the central portion 1a. The mechanical arm, further than being integrally rotatable with respect the central portion, is preferably movable with respect to the central portion. A preferred solution is to provide a pivotable mechanical arm 3. In other words, the mechanical arm may rotate around a second axis A2, that is typically lying on a plane that is substantially perpendicular with respect to the central axis A1. In figure 4, for easiness of visualization, axis A2 is shown distanced from the mechanical arm 3. It is to be understood that, the axis A2 is typically placed at the hinge point around which the mechanical arm pivots.

In the shown embodiment, the mechanical arm 3 is hinged with respect to the central portion 1. The mechanical arm 3 may be in substantially one piece, but it may be also provided with one or more foldable portions (i.e. foldable one with respect to the others). In general, thus, the mechanical arm is configured so that, at least one of its portion, may be raised or lowered with respect to the ground 2, and in particular so that the vehicle 2 may be raised or lowered with respect to the ground G.

Also, according to a further possible embodiment, the mechanical arm 3 may be provided with telescopic (i.e. nested) portions, so as to vary the length of the mechanical arm, and thus the distance between the vehicle 2 and the central axis A1. According to an embodiment, the deployment of the telescopic portions of the mechanical arm 3 may be controlled by the user U via the control means so as to vary the "movement direction" of the vehicle 2. Alternatively, it may be automatically controlled by the amusement ride 1, or by an operator of the amusement ride 1. According to the shown embodiment, the vehicle 2 is pivoted to the mechanical arm 3 around a third axis A3, that is preferably perpendicular to the central axis A1, and possibly also parallel with respect to the second axis A2. Typically, the vehicle 2 is hinged with respect to the mechanical arm 3.

The amusement ride 1 is also provided with driving means M to move the vehicles 2. In the shown embodiment, the driving means are schematically shown as a motor rotating the central portion 1a of the amusement ride.

In general, the amusement ride is provided with a plurality of driving means. As an example, the amusement ride 1, as mentioned, is typically provided with suitable actuators, known (e.g. electrical, pneumatic, hydraulic) and not shown in the figures, to move the vehicle 2 in response to the user operating the control means 2c. Preferably, the amusement ride 1 is provided with one or more sensor S1, S2, S3 to determine a change in a vehicle parameter of the vehicle 2. Preferably, at least part of the sensors S1, S2, S3 are encoders.

As an example, in the shown embodiment, the amusement ride is provided with an encoder S2 to sense an angular movement of the mechanical arm around the second axis A2, and with a further encoder S3 to sense an angular movement of the vehicle 2 around the third axis A3. Further sensors may be provided, e.g. to sense the various movements of the vehicle 2 in response to the commands of the user. According to another aspect, a motor drive sensor S1 may be provided to sense the operating (rotational) speed of the motor M of the driving means.

A further sensor, e.g. a linear encoder, may be operated to sense the operation of the user U on the control means 2c. According to an aspect, the variation of a vehicle parameter may be sensed indirectly by means of the evaluation of the operation of the user on the control means 2c.

As better discussed later, there is no strict need to evaluate the exact position or orientation of the vehicle 2 with respect to the ground G, but to evaluate change in a vehicle parameter. In particular, with reference to the shown embodiment, an encoder evaluating the angular position of the vehicle (considered in plant view) may be omitted.

The amusement ride 1 is also provided with a head-mounted display HMD. The head-mounted display HMD, which is typically in the form of glasses, is a device that is wearable on the head H of the user, and are provided with a display D configured to show pictures (generally animated pictures), i.e. a so called "virtual reality", to the user U. The head-mounted display HMD is typically configured so that the user can't see the external environment surrounding the display D, i.e. it is provided with "blinkers" that allow the user to look only at the display. The display may be partially transparent, in order to allow the user to see the external environment through it, and adding some virtual figures on it, resembling that they are actually present in the external environment. Typically, however, the display is opaque, so that the user U, once he wears the head-mounted display HMD can only see pictures shown by the display D.

In a possible embodiment, the head-mounted display may be operated by the user (or by an external operator, e.g. the operator of the amusement ride 1) so as to selectively show the external environment, allowing the user to safely move through it, and to show pictures on the display D.

Various head-mounted display HMD capable to show a virtual reality to a user are known in the art, e.g. the ones known by the commercial names of "Oculus Rift" by Oculus VR, "Samsung Gear VR" by Samsung, etc. As the known head-mounted display HMD are not usually intended to the use in an amusement ride, safety precautions may be used, among others, to securely constrain the head-mounted display HMD to the head H of a user U. Possible solutions may include a plurality of belts or straps to secure the head-mounted display HMD to the head H of a user U.

According to an aspect, the virtual reality may not only be proposed visually to the user, but other senses may be affected. As an example, the amusement ride, typically the vehicle 2 or the head-mounted display HMD, may be provided with speakers, headphones, or similar elements (not shown) to produce sounds audible by the user U. Other actuators, known in the art, may be used to involve other sense of the user U, e.g. by tactile actuators, dispersion of scents, etc.

The amusement ride is also provided with one or more head sensor HS to evaluate the orientation of the head H of the user U. Typically these sensors may be one or more of an accelerometer, a gyroscope, a magnetometer and a GPS. A head sensor HS is schematically shown as an antenna protruding from the head-mounted display HMD, for easiness of visualizations. In reality, the head sensor(s) is typically built in the head-mounted display HMD, even if independent head sensors may be used in different embodiments. For example some embodiments can provide alternatively or in addition to the head sensors built in the head-mounted display HMD an infrared camera placed frontally to the user configured to provide an optical tracking for determining the position of the user's head.

It has to be noted that, according to a possible embodiment, the head sensor(s) may be used as vehicle sensor, too, or in general as sensorto indirectly evaluate the result of the commands of the user on the control means 2c.

According to an aspect, the virtual reality VR shown to the user is affected by the change in a vehicle parameter and by the orientation of the head H of the user U.

In more detail, the virtual reality VR is shown for easiness of visualization as a schematic bi-dimensional lateral view. On the contrary, in reality, the virtual reality is shown to the user U as a three-dimensional space, that the uses sees "in first person", i.e. as visible from the perspective of the user U. Also, the three dimensional space is built 360 degrees around the user in every direction, and the image shown to the user is the portion of such a three dimensional space towards which the head H of the user U is directed. As a result, when the user turns his/her head H, this change is sensed by the head sensors HS and the image shown to the user U is changed accordingly.

Also, the user U is typically shown as moving in the virtual reality VR. In other words, the user U is typically shown as moving in the three-dimensional space of the virtual reality. The movement is typically affected by the operation of the user on the control means 2c. In other words, a movement in the real world, i.e. a movement of the amusement vehicle 2, is typically reproduced also in the virtual reality VR, so that the user experience a movement with all his senses, e.g. visually due to the virtual reality and physically due to the acceleration to which is body is subjected due to the movement of the amusement vehicle 2.

According to a preferred embodiment, the virtual reality VR proposed to the user U is a driving simulation, i.e. a simulation of the driving of a virtual vehicle 2V, e.g. an aircraft, a space shift, etc.

The user U may act on the control means 2c to act on a vehicle parameter the amusement vehicle 2, so that he can experience on his/her body the effect (mainly accelerations) of the movement of the amusement vehicle. The simulation offered to the user U, i.e. the virtual reality VR proposed to the user U, is preferably generated so as to match the above mentioned "physical" experience of the user due to the movement of the amusement vehicle 2. In other words, as an example, if the user U operates on to control means 2c so as to raise the amusement vehicle 2, in the virtual reality VR proposed to the user U (the "driving simulation") the virtual vehicle 2V will be raised to.

There is no need to exactly match the extent of the movement of the amusement vehicle 2 to the one of the virtual vehicle 2V. More in general, there is no need to match the extent of the movement of the user in the real world to the one in the virtual reality VR. On the contrary, it is preferable to amplify the experience of the user U in the virtual reality.

As an example, if the user U operates the control means 2c so as to raise the amusement vehicle of 1 meter in the real world, the user U may experience a raise of 10 meters in the virtual reality VR.

It is however preferable that the experience in the virtual reality matches the change in direction and orientation caused by the operation of the user on the control means 2c. In other words, if the user operates the control means to move the amusement vehicle 2, he should experience a coherent movement in the virtual reality. In other words, if the user turns the amusement vehicle 2 in the real world around an axis with a certain orientation (e.g. a left turn), he should experience a turn around the same axis with same orientation also in the virtual reality (i.e. a left turn). Similarly, if the user U commands the amusement vehicle to translate along a direction in the real world (e.g. to move to the right) he should experience the a movement in the same direction (i.e. a move to the right) also in the virtual reality VR. As mentioned, the experience is preferably amplified to increase the thrill for the user U.

Also, with reference to the shown embodiment, the amusement vehicle is moved around an axis A. This experience may be proposed also in the virtual reality, but e.g. with a much greater speed than the real one. Also, because the rotation is not directly controlled by the user U (which has control over the deviation from such a rotation), the user may be presented with a substantially straight movement, i.e. with substantially a forward motion.

The space of the virtual reality, i.e. the virtual space into which the user moves in the virtual reality VR may be totally predefined, or it may present some random events, e.g. object that may appear randomly in different rides. As an example virtual obstacles VO may randomly appear in the virtual reality VR. The user may e.g. be challenged to avoid the virtual obstacles VO, or to operate certain actions on it. As an example, the amusement vehicle 2 may be provided with further control means that have an effect only in the virtual reality VR, e.g. control means to operate a virtual machine gun to shoot at virtual obstacles VO.

Considering the fact that the user U may change its path during different rides on the amusement ride 1, and that also random events may be generated on the virtual reality, a user U may experience a different ride every time he/she uses the amusement ride 1.

According to an aspect, the user U may be shown a virtual reality where also at least one of the other users of the same amusement ride 1 are present. The user may thus see the movement of other users U, and interact with them (e.g. shooting trying to hit their virtual vehicle, or cooperating in destroying a common virtual object) so as to offer a "multiplayer" experience.

Furthermore, as mentioned, a single amusement vehicle 2, as the one shown in the figures, may be provided with more than one seat 2a, 2b to house a plurality of users U. Both the users are provided with a head-mounted display HMD and with one or more head sensor HS. The management of the control means 2c may be carried out in many different ways. As an example, only one of the player may be provided with control means. Alternatively (and preferably) both the player may be provided with control means 2c. In a first embodiment, both the users may command the amusement vehicle in the same way. Alternatively, the user may command different movement of the amusement vehicle 2. As an example a first user may only turn the vehicle 2, while the other user U may raise or lower the vehicle. Also, a first user may be capable of moving the amusement vehicle 2 (and the virtual vehicle 2V, if present, too), while the other user may be provided with control means that have an effect only in the virtual reality (e.g. the control of the above mentioned virtual machine gun), etc. In general the control means may be properly configured to offer to the users of the same amusement vehicle 2 the desired multiplayer experience.

The amusement ride 1 is also provided with a processing system 11a, 11b, 11c to generate the virtual reality VR.

The generation of the virtual reality VR, and actually of the virtual realities, as each user experience a different virtual reality with respect to the other ones, required a high computing power. As a result, the amusement ride 1 is preferably provided with more than one processing unit 11a, 11b, 11c. Preferably, each of the head-mounted display HMD is provided with at least one processing unit 11a, 11b, i.e. there is at least one processing unit 11a, 11b per user. In the shown embodiment, the user U on seat 2a is provided with a processing unit 11a. the processing unit 11a is on board of the vehicle 2, and communicates, wirelessly or in a wired manner, with the head-mounted display HMD.

In embodiments, the processing unit 11a may be mounted elsewhere on the amusement ride 1, or it may be directly integrated within the head mounted display HMD. It is also possible to use both a processing unit of the amusement ride and a processing unit of the head-mounted display for the same user U.

Also, the amusement ride 1 may be provided with one or more central processing unit 11c.

In the shown embodiment, the processing unit manages the data coming from the vehicle sensor S1, S2, S3, while the processing unit 11a associated to the user U manages the data coming from the head sensor HS, and both cooperate to generate the virtual reality VR for the user U. Different configuration may be however possible. As an example, the head mounted display may be used to generate the virtual reality and to communicate to the head sensor HS to evaluate the orientation of the head H of the user U and to infer the commands input by the user on the control means 2c (by sensing the movement of the user in the real world). This solution provides for an inferior result (typically inferior graphic performances), due to the lack of computing power, but it is totally independent from the other portion of the amusement ride, and can be particularly easily adapted to different amusement rides.

Typically, the processing system 11a, 11b, 11c is used also to control operation of the driving means, and of the different actuator and transducers of the amusement ride 1. To this scope, it may use the same processing units used for the generation of the virtual reality, or it may be provided with further processing units exclusively for such a purpose.

During use, at first one or more users are loaded onto the amusement ride, i.e. one or more user are placed on the vehicle 2. As before, reference will be made to the operation of the amusement ride with a single user U, as the following description applies mutatis mutandis also to the operation of the amusement ride 1 with a plurality of users.

Before starting the operation of the movement ride 1, the user U wears the head-mounted display HMD, and secures it to his/her head. Such an operation may be carried out before or after loading the vehicle 2.

Subsequently, the driving means M are operated to move the vehicles 2. As an example, with reference to the embodiment of the drawings, the vehicle 2 is moved around the central axis A1.

Preferably, the starting of the experience of the user U in the virtual reality VR is synchronized with the motion of the amusement vehicle 2. As an example, in the embodiment where the user U is presented with a driving simulation, the virtual vehicle 2V is started substantially together with the amusement vehicle 2.

During operation, the user U may move his/her head H, and may operate the control means 2c to modify one of the vehicle parameters. As discussed above, the head sensor HS and, if present, also the vehicle sensors S1, S2, S3, sense the above events, and the processing system show the consequences of these events in the virtual reality. AS mentioned, preferably the user is encouraged to operate on the control means because of events that occur in the virtual reality; thus, the user (U) may drive his actual vehicle and his virtual vehicle 2 in response to the Virtual Reality generated by the processing system. As above discussed, the user's Virtual Reality is also at least in part generated by the movements of the amusement vehicle operated by the user. As an example, in a driving simulation, the user U may be shown a virtual obstacle VO that the user U should avoid. The user U, in response acts on the control means 2c. As a result, the amusement vehicle is moved, so that the user U may physically experience the movement, mainly due to the accelerations caused on his/her body by the movement of the amusement vehicle 2. Further to that, the virtual reality is changed accordingly, so that the user may at least visually experience the consequence of his operation on the control means 2c. As before mentioned, the user may e.g. command the amusement vehicle 2 to be raised with respect to the ground, so that he may experience an acceleration on his/her body. Contemporarily, he may experience a raising movement also in the virtual reality VR, e.g. the virtual vehicle 2V may be raised as well.

Preferably, the experience in the virtual reality is amplified to increase the thrill of the user, e.g. he is shown moving at a greater speed with respect to the real world, and the extent of the movement in the virtual reality VR is greater than the extent of the corresponding movement in the real world.

The user may also operate on control means that provide an effect only in the virtual reality VR, e.g. control of a virtual light, of a virtual machine gun, etc.

According to an aspect, the user may see also the other users in the virtual reality. As an example, in a driving simulation, he may see the virtual vehicles of the other users and interact with them, e.g. hitting them with a virtual machine gun, etc.

When the end of the ride approaches, the amusement ride 1 (and in particular the amusement vehicle 2) begins to decelerate. Preferably, this situation is shown also in the virtual reality, where a deceleration is also shown, e.g. a deceleration of the virtual vehicle 2.

Finally, the users are unloaded from the amusement vehicle 2. At this point the virtual reality may be stopped, or it may continue to e.g. show a recap of the experience in the virtual reality (e.g. the score of the user, the number of turns, the number of obstacles avoided, etc.).

## Claims

1. A trackless amusement ride (1) comprising:
- at least one moveable amusement vehicle (2) provided with at least one seat (2a, 2b) for one or more users (U), and with control means (2c) operable by a user (U) to modify at least one vehicle parameter chosen between: the movement direction, the orientation, the height with respect to the ground of said amusement vehicle;
- driving means (M) for moving said at least one amusement vehicle (2);
- at least one head-mounted display (HMD) wearable by said users (U)
- one or more head sensors (HS) to sense at least the orientation of the head of said one or more users;
wherein the trackless amusement ride (1) further comprises a processing system configured to generate a virtual reality (VR) to be displayed to said users (U) by means of said head-mounted display (HMD), said virtual reality being generated according to at least:
- the data sensed by said one or more head sensors (HS);
- one or more of said at least one vehicle parameters; **characterised in that** said amusement vehicle (2) is constrained to a mechanical arm (3) rotatable around a central rotation axis (A1), preferably arranged substantially vertically with respect to the ground (G).

2. The trackless amusement ride (1) according to claim 1, wherein said mechanical arm (3) is rotatable about a second rotation axis (A2) allowing the mechanical arm (3) to be raised or lowered with respect to the ground (G).

3. The trackless amusement ride (1) according to claim 1 or 2, comprising one or more vehicle sensors (S1, S2, S3), to directly or indirectly sense a change in one or more of said vehicle parameters.

4. The trackless amusement ride (1) according to claim 3, wherein said vehicle sensors (S1, S2, S3) comprise one or more encoders (S2, S3).

5. The trackless amusement ride (1) according to any of the preceding claims, wherein said processing system (11a, 11b, 11c) comprises at least one processing unit (11a) associated to at least one of said head-mounted display (HMD).

6. The trackless amusement ride (1) according to claim 5, wherein said processing unit (11a) associated to the head mounted display (HMD) is located on the amusement vehicle (2) or on a part of the ride moving with said vehicle.

7. The trackless amusement ride (1) according to claim 5, wherein said processing unit (11a) associated to the head mounted display (HMD) is integrated within the head-mounted display (HMD).

8. The trackless amusement ride (1) according to any of the preceding claims 4 to 8, when depending from claim 3, wherein at least one of said vehicle sensor (S3) is configured to sense the raising or lowering of said mechanical arm (3).

9. The trackless amusement ride (1) according to any of the preceding claim, wherein the processing system (11a, 11b) is configured to generate a virtual vehicle (2V) for said virtual reality (VR), and to move and/or orientate said virtual vehicle (2V) according to one or more of said vehicle parameters.

10. A method of operating an amusement ride (1) according to any previous claim, comprising the steps of:
(a) loading one or more users (U) on said at least one seat (2a, 2b);
(b) activating said driving means (M) to move said at least one vehicle (2);
(c) sensing at least the orientation of the head (H) of said one or more users (U) by means of said head sensors;
(d) modifying one or more of said at least one vehicle parameters of said amusement vehicle by said control means (HS) operated by said at least one user (U);
(e) generating a virtual reality (VR) as a function of the orientation of the head (H) of said user (U) sensed by the head sensors (HS) in said step (c) and of the operation of the user on said control means of said step (d);
(f) displaying said virtual reality (VR) of step (d) to said one or more user (U) by means of said head-mounted display (HMD);

11. The method according to claim 10, wherein a modification of a vehicle parameter of step (d) is reproduced in the virtual reality (VR) with the same direction and orientation.

12. The method according to claim 10 or 11, wherein during step (e), said at least one modification of step (d) is reproduced in the virtual reality (VR) in amplified manner.

13. The method according to any claim from 10 to 12, wherein the user (U) drives a virtual vehicle (2).

14. The method according to claim 13, wherein the user (U) drives a virtual vehicle (2) in response to the Virtual Reality generated by said processing system.

15. The method according to any claim from 10 to 14, wherein a first user (U) sees at least one of the other users of the amusement ride in the virtual reality (VR).

## Patentansprüche

1. Spurlose Vergnügungsfahrt (1), umfassend:
- mindestens ein bewegliches Vergnügungsfahrzeug (2), das mit mindestens einem Sitz (2a, 2b) für einen oder mehrere Benutzer (U) und mit Steuermittel (2c) versehen ist, die von einem Benutzer (U) betätigt werden können, um mindestens ein Fahrzeugparameter zu modifizieren, welcher ausgewählt ist aus: der Bewegungsrichtung, der Ausrichtung, der Höhe in Bezug auf den Boden des Vergnügungsfahrzeugs;
- Fahrmittel (M) zum Bewegen des mindestens einen Vergnügungsfahrzeugs (2);
- mindestens ein von den Benutzern (U) tragbares Head-Mounted-Display (HMD);
- einen oder mehrere Kopfsensoren (HS), um mindestens die Ausrichtung des Kopfes des einen oder der mehreren Benutzer zu erfassen;
wobei die spurlose Vergnügungsfahrt (1) ferner ein Verarbeitungssystem umfasst, das konfiguriert ist, um eine virtuelle Realität (VR) zu erzeugen, die den Benutzern (U) mittels des am Kopf montierten Displays (HMD) angezeigt werden soll, wobei die virtuelle Realität erzeugt wird mindestens gemäß:
- den von dem einen oder den mehreren Kopfsensoren (HS) erfassten Daten;
- einem oder mehreren der mindestens einen Fahrzeugparametern,
**dadurch gekennzeichnet, dass**
das Vergnügungsfahrzeug (2) auf einen mechanischen Arm (3) beschränkt ist, der um eine zentrale Drehachse (A1) drehbar ist, und vorzugsweise im Wesentlichen vertikal in Bezug auf den Boden (G) angeordnet ist.

2. Spurlose Vergnügungsfahrt (1) nach Anspruch 1, wobei der mechanische Arm (3) um eine zweite Drehachse (A2) drehbar ist, wodurch der mechanische Arm (3) in Bezug auf den Boden (G) angehoben oder abgesenkt werden kann.

3. Spurlose Vergnügungsfahrt (1) nach Anspruch 1 oder 2, umfassend einen oder mehrere Fahrzeugsensoren (S1, S2, S3), um eine Änderung in einem oder mehreren der Fahrzeugparameter direkt oder indirekt zu erfassen.

4. Spurlose Vergnügungsfahrt (1) nach Anspruch 3, wobei die Fahrzeugsensoren (S1, S2, S3) einen oder mehrere Codierer (S2, S3) umfassen.

5. Spurlose Vergnügungsfahrt (1) nach einem der vorhergehenden Ansprüche, wobei das Verarbeitungssystem (11a, 11b, 11c) mindestens eine Verarbeitungseinheit (11a) umfasst, die mindestens einem der Head-Mounted-Displays (HMD) zugeordnet ist.

6. Spurlose Vergnügungsfahrt (1) nach Anspruch 5, wobei sich die dem Head-Mounted-Display (HMD) zugeordnete Verarbeitungseinheit (11a) an dem Vergnügungsfahrzeug (2) oder an einem Teil der Fahrt befindet, der sich mit dem Fahrzeug bewegt.

7. Spurlose Vergnügungsfahrt (1) nach Anspruch 5, wobei die Verarbeitungseinheit (11a), die dem Head-Mounted-Display (HMD) zugeordnet ist, in den Head-Mounted-Display (HMD) integriert ist.

8. Spurlose Vergnügungsfahrt (1) nach einem der vorhergehenden Ansprüche 4 bis 8, wenn dies von Anspruch 3 abhängt, wobei mindestens einer der Fahrzeugsensoren (S3) konfiguriert ist, um das Anheben oder Absenken des mechanischen Arms (3) zu erfassen.

9. Spurlose Vergnügungsfahrt (1) nach einem der vorhergehenden Ansprüche, wobei das Verarbeitungssystem (11a, 11b) konfiguriert ist, um ein virtuelles Fahrzeug (2V) für die virtuelle Realität (VR) zu erzeugen und um das virtuelle Fahrzeug (2V) zu bewegen und/oder zu orientieren gemäß einem oder mehreren der Fahrzeugparameter.

10. Verfahren zum Betreiben einer Vergnügungsfahrt (1) nach einem der vorherigen Ansprüche, umfassend die Schritte:
(a) Laden eines oder mehrerer Benutzer (U) auf mindestens einen Sitzplatz (2a, 2b);
(b) Aktivieren der Fahrmittel (M), um das mindestens eine Fahrzeug (2) zu bewegen;
(c) Erfassen mindestens der Ausrichtung des Kopfes (H) des einen oder der mehreren Benutzer (U) mittels der Kopfsensoren;
(d) Modifizieren eines oder mehrerer der mindestens einen Fahrzeugparameter des Vergnügungsfahrzeugs durch das Steuermittel (HS), die von dem mindestens einen Benutzer (U) betrieben werden;
(e) Erzeugen einer virtuellen Realität (VR) als eine Funktion der Ausrichtung des Kopfes (H) des Benutzers (U), die von den Kopfsensoren (HS) in dem Schritt (c) erfasst wird, und der Betreibung des Benutzers des Steuermittels des Schritts (d);
(f) Anzeigen der virtuellen Realität (VR) von Schritt (d) für einen oder mehrere Benutzer (U) mittels des Head-Mounted-Displays (HMD).

11. Verfahren nach Anspruch 10, wobei eine Modifikation eines Fahrzeugparameters von Schritt (d) in der virtuellen Realität (VR) mit der gleichen Richtung und Orientierung reproduziert wird.

12. Verfahren nach Anspruch 10 oder 11, wobei während dem Schritt (e) die mindestens eine Modifikation von Schritt (d) in der virtuellen Realität (VR) in verstärkter Weise reproduziert wird.

13. Verfahren nach einem der Ansprüche 10 bis 12, wobei der Benutzer (U) ein virtuelles Fahrzeug (2) fährt.

14. Verfahren nach Anspruch 13, wobei der Benutzer (U) ein virtuelles Fahrzeug (2) als Antwort auf die von dem Verarbeitungssystem erzeugte virtuelle Realität fährt.

15. Verfahren nach einem Anspruch von 10 bis 14, wobei ein erster Benutzer (U) mindestens einen der anderen Benutzer der Vergnügungsfahrt in der virtuellen Realität (VR) sieht.

## Revendications

1. Manège sans piste (1) comprenant :
- au moins un véhicule de divertissement mobile (2) pourvu d'au moins un siège (2a, 2b) pour un ou plusieurs utilisateurs (U), et de moyens de commande (2c) actionnables par un utilisateur (U) pour modifier au moins un paramètre de véhicule choisi entre : la direction de déplacement, l'orientation, la hauteur par rapport au sol dudit véhicule de divertissement ;
- des moyens d'entraînement (M) pour déplacer ledit au moins un véhicule de divertissement (2) ;
- au moins un visiocasque (HMD) pouvant être porté par lesdits utilisateurs (U)
- un ou plusieurs capteurs de tête (HS) pour détecter au moins l'orientation de la tête desdits un ou plusieurs utilisateurs ;
dans lequel le manège sans piste (1) comprend en outre un système de traitement configuré pour générer une réalité virtuelle (VR) à afficher auxdits utilisateurs (U) au moyen dudit visiocasque (HMD), ladite réalité virtuelle étant générée selon au moins :
- les données détectées par lesdits un ou plusieurs capteurs de tête (HS) ;
- un ou plusieurs desdits au moins un paramètres de véhicule ; **caractérisé en ce que**
ledit véhicule d'amusement (2) est contraint à un bras mécanique (3) pouvant tourner autour d'un axe de rotation central (A1), de préférence agencé sensiblement verticalement par rapport au sol (G).

2. Manège sans piste (1) selon la revendication 1, dans lequel ledit bras mécanique (3) peut tourner autour d'un second axe de rotation (A2) permettant au bras mécanique (3) d'être élevé ou abaissé par rapport au sol (G).

3. Manège sans piste (1) selon la revendication 1 ou 2, comprenant un ou plusieurs capteurs de véhicule (S1, S2, S3), pour détecter directement ou indirectement un changement dans un ou plusieurs desdits paramètres de véhicule.

4. Manège sans piste (1) selon la revendication 3, dans lequel lesdits capteurs de véhicule (S1, S2, S3) comprennent un ou plusieurs encodeurs (S2, S3).

5. Manège sans piste (1) selon l'une quelconque des revendications précédentes, dans lequel ledit système de traitement (11a, 11b, 11c) comprend au moins une unité de traitement (11a) associée à au moins l'un dudit visiocasque (HMD).

6. Manège sans piste (1) selon la revendication 5, dans lequel ladite unité de traitement (11a) associée au visiocasque (HMD) est située sur le véhicule de divertissement (2) ou sur une partie du manège se déplaçant avec ledit véhicule.

7. Manège sans piste (1) selon la revendication 5, dans lequel ladite unité de traitement (11a) associée au visiocasque (HMD) est intégrée à l'intérieur du visiocasque (HMD).

8. Manège sans piste (1) selon l'une quelconque des revendications 4 à 8 précédentes, lorsqu'elle dépend de la revendication 3, dans lequel au moins l'un dudit capteur de véhicule (S3) est configuré pour détecter l'élévation ou l'abaissement dudit bras mécanique (3).

9. Manège sans piste (1) selon l'une quelconque des revendications précédentes, dans lequel le système de traitement (11a, 11b) est configuré pour générer un véhicule virtuel (2V) pour ladite réalité virtuelle (VR), et pour déplacer et/ou orienter ledit véhicule virtuel (2V) selon un ou plusieurs desdits paramètres de véhicule.

10. Procédé de fonctionnement d'un manège (1) selon l'une quelconque des revendications précédentes, comprenant les étapes consistant à :
(a) charger un ou plusieurs utilisateurs (U) sur ledit au moins un siège (2a, 2b) ;
(b) activer lesdits moyens d'entraînement (M) pour déplacer ledit au moins un véhicule (2) ;
(c) détecter au moins l'orientation de la tête (H) desdits un ou plusieurs utilisateurs (U) au moyen desdits capteurs de tête ;
(d) modifier un ou plusieurs desdits au moins un paramètres de véhicule dudit véhicule de divertissement par l'intermédiaire desdits moyens de commande (HS) actionnés par ledit au moins un utilisateur (U) ;
(e) générer une réalité virtuelle (VR) en fonction de l'orientation de la tête (H) dudit utilisateur (U) détectée par les capteurs de tête (HS) dans ladite étape (c) et du fonctionnement de l'utilisateur sur lesdits moyens de commande de ladite étape (d) ;
(f) afficher ladite réalité virtuelle (VR) de l'étape (d) auxdits un ou plusieurs utilisateurs (U) au moyen dudit visiocasque (HMD).

11. Procédé selon la revendication 10, dans lequel une modification d'un paramètre de véhicule de l'étape (d) est reproduite dans la réalité virtuelle (VR) avec les mêmes direction et orientation.

12. Procédé selon la revendication 10 ou 11, dans lequel durant l'étape (e), ladite au moins une modification de l'étape (d) est reproduite dans la réalité virtuelle (VR) d'une manière amplifiée.

13. Procédé selon l'une quelconque des revendications 10 à 12, dans lequel l'utilisateur (U) conduit un véhicule virtuel (2).

14. Procédé selon la revendication 13, dans lequel l'utilisateur (U) conduit un véhicule virtuel (2) en réponse à la réalité virtuelle générée par ledit système de traitement.

15. Procédé selon l'une quelconque des revendications 10 à 14, dans lequel un premier utilisateur (U) voit au moins l'un des autres utilisateurs du manège dans la réalité virtuelle (VR).
